# FASCICULE DE BREVET EUROPEEN

(11) **EP 4 200 556 B1**
(45) Date de publication et mention de la délivrance du brevet: **23.09.2026**
(21) Numéro de dépôt: 21762698.5
(22) Date de dépôt: 17.08.2021
(51) Int. Cl.: F21V 5/00, F21V 5/04

(54) **DISPOSITIF D'ÉCLAIRAGE OPÉRATOIRE**
BELEUCHTUNGSEINRICHTUNG FÜR OPERATIONEN
OPERATING LIGHTING DEVICE

(30) Priorité: 24.08.2020 FR 2008640
(43) Date de publication de la demande: 28.06.2023
(73) Titulaire: Maquet SAS, 45074 Orléans, Cedex 2 (FR)
(72) Inventeur: VU THI, Minh-Hong, 45074 Orléans, cedex 2 (FR); BRETON, Jean-Philippe, 45074 Orléans, cedex 2 (FR); SENELIER, Gregory, 45074 Orléans, cedex 2 (FR)
(74) Mandataire: Zacco GmbH
(86) Numéro de dépôt international: PCT/EP2021/072845
(87) Numéro de publication internationale: WO 2022/043135

(56) Documents cités:
- WO-A1-01/16524
- WO-A1-02/06723
- WO-A1-2011/080767
- WO-A1-2014/195876
- WO-A1-2018/162310
- DE-A1- 102011 084 881

## Description

### Domaine Technique

La présente divulgation concerne un dispositif d'éclairage opératoire destiné à être utilisé dans une salle d'opération.

### Technique antérieure

Les éclairages opératoires se présentent généralement sous la forme d'une coupole pouvant être suspendue au plafond d'une salle d'opération par un support articulé ou monté sur une structure mobile. Elles peuvent comprendre une ou plusieurs sources lumineuses comme des LEDs, des ampoules halogènes ou, plus rarement, des ampoules à incandescence. Selon la norme française pour les éclairages opératoire NF EN 60601-2-41, l'éclairage opératoire, doit générer un champ de lumière blanche à 1 m de distance de la zone d'émission de la lumière qui est caractérisé par un éclairement central, un diamètre, un indice de rendu des couleurs et une température de couleur spécifique pour permettre des conditions de vision optimales pour un chirurgien. Cela est généralement obtenu en utilisant une ou plusieurs optiques pour collecter les faisceaux lumineux émis par les sources de lumière et les concentrer vers le champ opératoire. L'éclairage est ensuite fermé par une sous-face essentiellement transparente, qui peut également collecter ou dévier davantage les faisceaux lumineux mais aussi sceller la coupole de l'éclairage d'une manière qui convient à un environnement stérile. WO 02/06723 A1 décrit un dispositif d'éclairage opératoire de l'art antérieur.

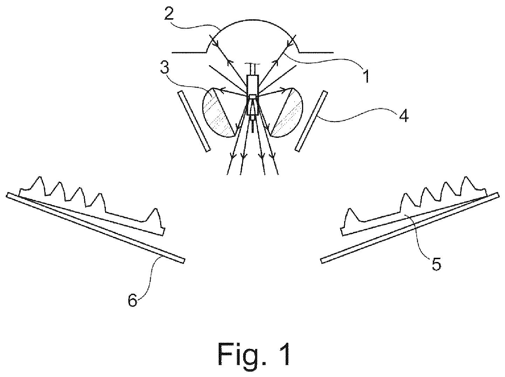

L'éclairage peut comprendre une seule optique ou des groupes d'optiques comprenant, par exemple, des réflecteurs, des contre-réflecteurs, des lentilles, des collimateurs ou autres. La figure 1 montre la structure d'un éclairage opératoire conventionnel. La source lumineuse 1 est ici une ampoule halogène. Les faisceaux lumineux de la source de lumière qui divergent vers le haut sont collectés et réfléchis vers le bas par le réflecteur convexe 2 disposé au-dessus de l'ampoule 1. Ces faisceaux ainsi que les faisceaux lumineux émis latéralement par la source sont collectés par des condenseurs 3 et rendus en un faisceau parallèle ou convergent. Ce faisceau est ensuite dirigé vers le champ opératoire grâce à une série de prismes 5. Il peut avoir des filtres 4, pour filtrer les rayons de lumière ultraviolets et infra rouge de la source halogène. Enfin, ce système optique est fermé avec la sous-face transparente 6. Chacune de ces différentes optiques doivent être correctement positionnées et bien maintenues en place dans l'éclairage. Des dispositifs utilisant des LED comme sources lumineuses sont soumis à des problèmes comparable, le défi étant exacerbé par la nécessité de prévoir des optiques pour chaque LED. Pour cette raison, il n'est pas rare que les éclairages opératoires comportent une structure interne pour fixer les sources de lumière, les circuits imprimés éventuels, et diverses optiques, telles que les collimateurs, les lentilles ou les réflecteurs. L'éclairage est par conséquence coûteux et également complexe à monter et à entretenir. Il nécessite en outre une précision minutieuse lors de la fabrication afin de garantir que les différents éléments puissent être correctement alignés.

### Sommaire

La présente divulgation a pour but d'alléger les problèmes liés aux arrangements connus et, plus précisément, de proposer un dispositif d'éclairage opératoire avec une conception simplifiée rendant l'ensemble du dispositif plus léger, plus durable, plus facile à assembler et moins coûteux.

Ceci et d'autres buts sont réalisés dans un dispositif d'éclairage opératoire comprenant une coque et une pluralité de sources lumineuses couplées à la coque, le dispositif comprenant en outre une plaque de fermeture selon la revendication 1 qui est au moins partiellement transparente à la lumière et qui peut être couplée à la coque pour clore le dispositif en laissant passer la lumière des sources lumineuses. La plaque de fermeture comprend une pluralité d'éléments de lentille, chaque élément de lentille étant configuré pour collecter et focaliser la lumière provenant d'une source lumineuse correspondante afin de générer une tache d'éclairage d'un diamètre prédéterminé situé à une distance prédéterminée du dispositif d'éclairage. Les sources lumineuses et cette plaque de fermeture sont disposées de telle sorte que les faisceaux lumineux provenant des sources lumineuses et reçus par les éléments de lentille associés arrivent sur les éléments de lentille sensiblement sans réflexion ni déviation. En empêchant toute déviation et réflexion avant que la lumière des sources lumineuses n'atteigne les éléments optiques de la plaque de fermeture, cette disposition fait en sorte que toutes optiques nécessaires à la collection et à la focalisation de la lumière des sources lumineuses soient comprises dans la plaque de fermeture. En d'autres termes le dispositif est dépourvu d'éléments optiques entre les sources lumineuses et la plaque de fermeture. Dans cette manière, le dispositif est essentiellement vide entre les sources lumineuses et la plaque de fermeture. La structure globale du dispositif d'éclairage est ainsi simplifiée, ce qui facilite à la fois le montage et l'entretien. Comme tous les éléments peuvent être fixés à la coque, il n'est plus nécessaire de prévoir un support mécanique supplémentaire. Cela permet de réduire le poids total et d'augmenter la durabilité.

Chaque élément de lentille est en outre une lentille de Fresnel comprennent une zone centrale de lentille entourée d'une série de prismes surélevés disposés concentriquement sur une surface d'entrée de lumière de la plaque de fermeture. Cette structure permet un couplage optimal de la lumière provenant des sources lumineuses avec la tache lumineuse générée en minimisant l'épaisseur de la plaque. Conformément à un mode de réalisation privilégié, la plaque de fermeture comprend au moins un filtre. Cela peut être obtenu par un traitement de surface de la plaque pour provoquer un changement de la température de couleur de la lumière ou pour bloquer ou transmettre certaines longueurs d'onde pour des applications médicales spécifiques.

Dans une réalisation avantageuse, la plaque de fermeture a une surface de sortie de lumière sensiblement lisse. De cette manière, le nettoyage de la plaque de fermeture du dispositif d'éclairage est facilité et le risque de contamination est réduit.

De préférence, la surface de sortie de lumière de la plaque de fermeture est de forme sensiblement concave. Cela facilite le positionnement des faisceaux lumineux émanant des différentes sources lumineuses et des éléments optiques sur le même point lumineux.

La fabrication de la plaque de fermeture est facilitée selon un mode de réalisation préférentiel lorsque la plaque de fermeture est composée de plusieurs parties qui sont liées entre elles.

Conformément à l'invention, la plaque de fermeture comprend une plaque de base ayant une face extérieure qui correspond à la surface de sortie de lumière de la plaque de fermeture et une face intérieure avec au moins un élément de lentille fixé à la face intérieure de la plaque de base. Une telle structure permet de fabriquer les éléments de lentille individuellement, ce qui facilite grandement leur fabrication et la précision que l'on peut obtenir, en particulier lorsque ceux-ci sont formés par moulage, par injection tout en minimisant leur coût.

L'assemblage de la plaque de fermeture est encore plus facile parce que la plaque de base selon l'invention comporte une pluralité d'encoches auxquelles sont fixés les éléments de lentilles.

Conformément à une réalisation particulièrement avantageuse, la plaque de fermeture comprend en outre au moins une plaque optique disposée entre les éléments de lentille et la plaque de base pour diffuser ou filtrer la lumière. De cette manière, le dispositif d'éclairage peut fournir une variation du diamètre ou de la température de couleur de la tache sans avoir besoin d'optiques supplémentaires. Conformément à une réalisation privilégiée, l'épaisseur de la plaque de fermeture dans les zones comprennent les éléments de lentille est de 50 mm au maximum, de préférence de 25 mm au maximum. En outre, la distance entre les sources lumineuses et la plaque de fermeture est de préférence comprise entre 60 mm et 20 mm, et plus préférablement entre 50 mm et 20 mm.

Il est préférable qu'au moins un des éléments de la lentille et la plaque de fermeture soient en PMMA ou en PC, ou une combinaison de ces deux matériaux.

Dans une version particulièrement avantageuse, le dispositif d'éclairage comprend des sources lumineuses à LED.

Conformément à un autre aspect de la présente divulgation, une plaque de fermeture pour fermer un dispositif d'éclairage opératoire comme décrit ci-dessus est proposée, qui comprend une face extérieure lisse adaptée pour servir de surface de sortie de lumière et une face intérieure, dans laquelle une pluralité d'éléments de lentilles sont disposées sur la face intérieure de la plaque, chaque élément de lentille (20) étant une lentille de Fresnel, comprennent une zone centrale de lentille (201) entourée par une série de prismes surélevés (202, 203) disposés concentriquement sur une surface intérieure de la plaque de fermeture (18) et chaque élément de lentille étant configuré pour collecter et focaliser la lumière provenant d'une source lumineuse.

La plaque de fermeture comprend en outre au moins une plaque de base avec au moins un élément de lentille fixé à la face intérieure de la plaque de base.

Conformément à un autre aspect encore de la présente divulgation, un procédé de fabrication d'une surface d'émission de lumière d'un dispositif d'éclairage opératoire est divulgué, qui comprend les étapes consistant à : fournir une plaque de base ayant une face extérieure lisse adaptée pour servir de surface de sortie de lumière et une surface intérieure, fournir une pluralité d'éléments de lentilles adaptés pour collecter et focaliser la lumière provenant de sources lumineuses sensiblement sans réflexion ni déviation et fixer lesdits éléments de lentilles sur ladite surface supérieure de la plaque de base.

De préférence, le procédé comprend en outre l'étape consistant à insérer une plaque optique pour diffuser et/ou filtrer la lumière entre l'élément de lentille et la plaque de base avant de lier l'élément de lentille à la plaque de base. En alternative, la méthode peut inclure l'étape de traitement de surface de la plaque de fermeture pour bloquer la transmission de certaines longueurs d'onde.

La plaque de fermeture ainsi fabriquée est destinée à être utilisée dans un dispositif d'éclairage opératoire tel que décrit ci-dessus.

### Brève description des dessins

La présente divulgation sera mieux comprise et d'autre avantages apparaîtront à la lecture de la description détaillée d'un mode de réalisation pris à titre d'exemple nullement limitatif et illustré par les dessins annexes dans lesquels :
Figure 1 Illustre schématiquement la structure d'un dispositif d'éclairage opératoire selon l'art antérieur ;
Figure 2 est une vue schématique d'un dispositif d'éclairage opératoire conformément à la présente divulgation ;
Figure 3 illustre schématiquement le dispositif d'éclairage opératoire de la Fig. 2 en coupe ;
Figure 4 illustre schématiquement l'élément de lentille et sa fonction ;
Figure 5 illustre schématiquement une plaque de fermeture selon un mode de réalisation ;
Figure 6 illustre schématiquement une plaque de fermeture selon un autre mode de réalisation ;
Figure 7a montre une vue en coupe partiellement éclatée d'une plaque de fermeture du dispositif d'éclairage selon un autre mode de réalisation;
Figure 7b montre schématiquement une vue en coupe de la plaque de fermeture assemblée de la fig. 7b
Figure 8 est une vue en coupe, partiellement éclatée, d'une plaque de fermeture selon un autre mode de réalisation.

### Description détaillée

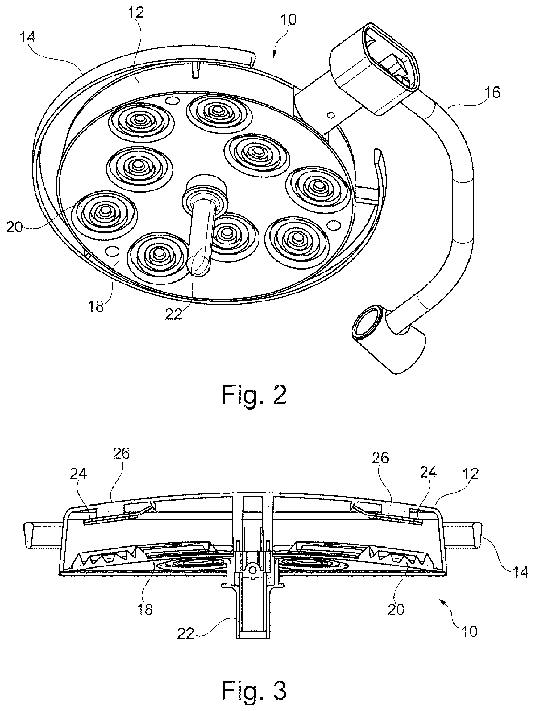

La figure 2 montre un dispositif d'éclairage opératoire 10 conforme à la présente divulgation. Le dispositif d'éclairage 10 peut être une tête de lampe, ou coupole, qui peut être utilisée seule ou en association avec d'autres coupoles pour éclairer un site d'opération. Le dispositif d'éclairage 10 comprend un boîtier ou une coque 12 qui, dans l'exemple illustré, est monté sur un bras 16. Ce bras 16 peut être fixé à un support articulé qui est ancré au plafond ou au mur d'une salle d'opération. Le bras peut également être monté sur un support fixe ou mobile placé au sol. La coque 12 a une surface arrière (non illustrée) et une paroi latérale continue s'étendant à un angle par rapport à la surface arrière.

Une poignée 14 est fixée à la paroi latérale de la coque 12 et s'étend sur une partie du pourtour de celle-ci. La face inférieure, ou surface de sortie de lumière, de ce dispositif d'éclairage 10 est couverte par une plaque de fermeture 18 ou sous-face, qui permet à la lumière de sortir du dispositif d'éclairage 10 tout en le protégeant de l'humidité, de la poussière, etc. et en permettant un nettoyage soigneux. Une autre poignée 22, s'étend de la coque 12 au centre de la surface d'émission de la lumière pour permettre la manipulation du dispositif 10 d'une seule main.

Comme l'illustre dans la vue en coupe du dispositif d'éclairage 10 présentée à la figure 3, la coque 12 définit un espace intérieur entre la paroi arrière et la paroi latérale pour accueillir des sources lumineuses et tout circuit associé, des dissipateurs thermiques ou autres. La plaque de fermeture 18 est munie de plusieurs éléments de lentille 20. De préférence chaque élément de lentille 20 est positionné de manière à collecter et focaliser la lumière d'une seule source lumineuse 24 correspondante. Dans un souci de clarté, seules deux sources lumineuses 24 sont illustrées dans la figure 3. Elles sont alignées avec un élément de lentille 20 dans la plaque de fermeture 18. En réalité, le dispositif d'éclairage 10 comprendra autant de sources lumineuses 24 qu'il y a d'éléments de lentille 20, à savoir neuf sources lumineuses et des éléments de lentille dans le dispositif illustré de la Fig. 1. Les sources lumineuses 24 illustrées dans la Fig. 3 sont des LED, de préférence de type "puce sur circuit" (Chip on Board - COB), mais d'autres types de LED et même d'autres sources lumineuses peuvent être utilisées. Dans l'exemple illustré, chaque source lumineuse à LED 24 est maintenue en place contre la paroi intérieure de la coque 12 à l'aide de connecteurs non représentés. D'autres moyens de fixation sont également possibles. La coque 12 peut être munie de plots surélevés 26 comme indiqué dans la figure pour positionner et orienter les sources lumineuses 24 et fournir une connexion thermique avec le corps de la coque 12 pour faciliter la dissipation de la chaleur. La plaque de fermeture 18 peut être fixée à la coque 12 par clipsage ou par des vis, par exemple à l'aide de la poignée centrale 22 ou par la mise en place de piliers de liaison. Une fois fixé, le bord extérieur de la plaque de fermeture 18 assure l'étanchéité avec le bord de la coque 12 contre l'humidité et la poussière. Un joint supplémentaire peut être employé pour améliorer cette étanchéité.

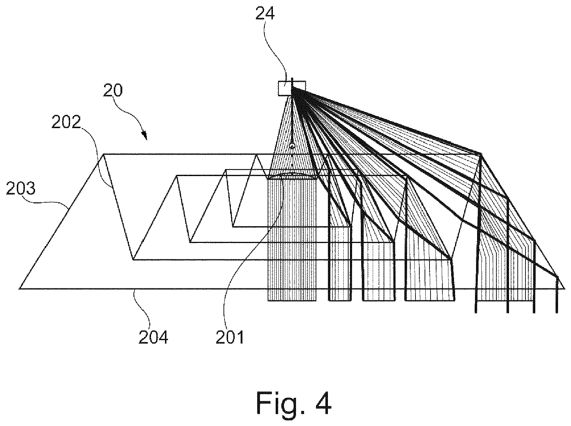

La figure 4 est une vue en coupe d'un élément de lentille 20 selon un mode de réalisation du dispositif d'éclairage. L'élément de lentille 20 est de forme sensiblement circulaire avec une zone centrale 201 comprenant une lentille surélevée, essentiellement convexe. Autour de cette zone centrale 201 sont disposées de manière concentrique des structures de prisme ou des dents, ayant chacune une surface d'entrée 202 et une surface de réflexion 203 disposées en angle l'une par rapport à l'autre. Dans le mode de réalisation illustré les faces d'entrée sont planes, mais les faces de réflexion 203 est une face complexe, avec une courbure. Il est possible que les faces d'entrées soient courbées également. Dans la représentation illustrée, quatre prismes ou dents concentriques sont prévus, mais il est possible d'utiliser plus ou moins de dents. La zone centrale 201 et les dents sont configurées pour collecter différentes parties du faisceau lumineux émis par la source lumineuse. Ceci est illustré de façon schématique dans la figure. Chaque partie du faisceau émis entre dans l'élément de lentille 20 à un endroit différent. La partie centrale du faisceau émis par la source lumineuse 24 passe dans la zone centrale de la lentille 201 et est focalisée vers un point désigné à une distance donnée de la lentille. Les sections plus divergentes de la lumière émise sont progressivement couplées à l'une des surfaces d'entrée 202 des dents où ils sont réfractés et ensuite soumises à une réflexion sur une surface de réflexion 203 vers le même point désigné. Tous les faisceaux sortent de l'élément de lentille 20 par une surface de sortie commune 204 et sont superposés au point focal. La surface de sortie 204 peut être plane ou légèrement concave pour mieux diriger la lumière vers le point lumineux désigné. Cette structure combinant une lentille centrale entourée de dents concentriques permet à l'élément de lentille 20 de recueillir un maximum de rayons provenant de la source lumineuse 24 et de les concentrer sur une zone focale donnée avec un encombrement minimum. Les éléments de lentille 20 remplissent donc la même fonction qu'une combinaison de lentilles, de collimateurs et de réflecteurs présents dans les dispositifs d'éclairage chirurgicaux classiques. Les éléments de lentille 20 peuvent être, ou inclure, une lentille de Fresnel.

L'efficacité de collecte de la lumière de chaque élément de lentille 20 dépend dans une certaine mesure de l'épaisseur de l'élément de lentille 20 et en particulier de la hauteur des dents, mais elle est également en fonction du diamètre de l'élément de lentille, de la distance entre un élément de lentille 20 et la source lumineuse associée 24 et également de la taille de la surface d'émission de lumière de la LED, lorsqu'elle est utilisée. En ce qui concerne l'épaisseur des lentilles 20, on observe que plus les dents sont hautes, en particulier vers l'extérieur de la lentille, plus le faisceau lumineux émis peut être collecté. Toutefois, cela se fait au détriment d'un diamètre de tache lumineux plus petit. Dans de nombreuses configurations du dispositif d'éclairage 10, les zones de transmission de la lumière de la plaque de fermeture 18, c'est-à-dire les zones comprenant les éléments optiques 20, auront une épaisseur maximale de 50 mm ou moins, et dans certaines configurations, une épaisseur maximale de 25 mm ou moins. En ce qui concerne la distance entre les sources lumineuses 24 et la partie la plus élevée de la plaque de fermeture 18, certaines versions ont une distance maximale de 60 mm, tandis que d'autres ont une distance maximale de 20 mm. La distance préférée se situe entre 20 mm et 50 mm.

Il ressort du dispositif d'éclairage illustré à la figure 3 qu'en incorporant tous les éléments optiques nécessaires pour collecter et focaliser la lumière dans la plaque de fermeture, la structure globale du dispositif d'éclairage est nettement simplifiée. Tous les éléments peuvent être fixés directement sur la coque 12. Il n'est donc pas nécessaire de prévoir des supports mécaniques intermédiaires pour les différents éléments. L'assemblage du dispositif est donc lui aussi considérablement simplifié. Le poids total de l'appareil peut également être réduit de manière significative. En outre, un espace est prévu entre les sources lumineuses 24 et les éléments de lentille 20. Dans certains modes de réalisation cet espace peut rester vide ou sensiblement vide. Dans d'autres mode de réalisations, cet espace peut être utilisé pour insérer une plaque de diffusion afin de modifier le diamètre du spot lumineux. Par exemple, des plaques de diffusion pourraient être insérées devant certains des éléments de lentille 20 et le diamètre de la tache lumineuse pourrait être modifié en modifiant les courants fournis aux sources lumineuses LED 24. De même, une plaque de filtrage pourrait être interposée entre une ou plusieurs des sources lumineuses 24 et les éléments de lentille correspondants 20 afin de faire varier la température de couleur de la tache lumineuse ou couper une certaine zone de longueur d'onde, en fonction des besoins du chirurgien.

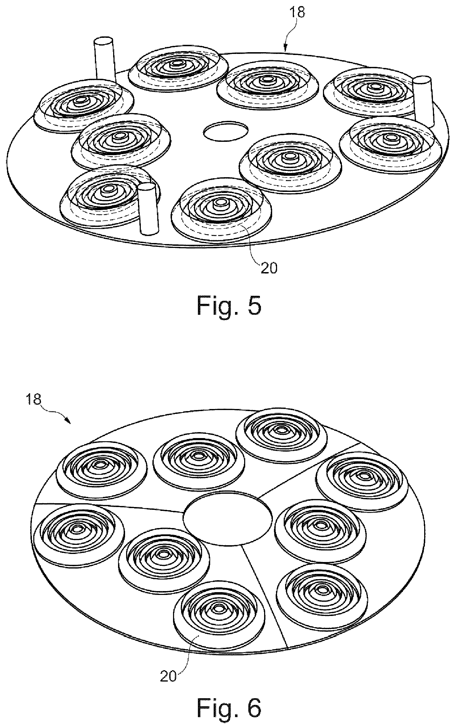

La figure 5 illustre une plaque de fermeture 18 selon un mode de réalisation de dispositif d'éclairage 10. La plaque de fermeture 18 comprend plusieurs éléments de lentilles 20 disposés à des endroits prédéfinis sur la surface pour correspondre aux positions des sources lumineuses 24 dans la coque 12. La plaque de fermeture est fabriquée à partir d'un matériau sensiblement transparent, tel que le PMMA (polyméthacrylate de méthyle), PC (polycarbonate), le silicone ou un autre matériau approprié. Elle est de préférence fabriquée par moulage, par injection et peut être formée d'une seule pièce. Elle peut également être formée de différents matériaux. Dans certaines versions, les zones non émettrices de lumière de la plaque de fermeture 18, c'est-à-dire les zones sans éléments de lentilles 20, peuvent être moins transparentes ou même sensiblement opaques. Cela peut être obtenu en appliquant un revêtement. La face inférieure de la plaque de fermeture18 illustrée dans la figure constituera la surface extérieure lorsqu'elle sera montée dans le dispositif d'éclairage 1. Cette face est de préférence lisse, ce qui lui permet de fermer de manière étanche pour le dispositif d'éclairage. Cette face peut par ailleurs être plane ou incurvée, par exemple concave. Des piliers 28 sont prévus sur la surface supérieure de la plaque de fermeture 18 pour permettre de la fixer à la coque 12 à l'aide de vis ou d'un dispositif similaire. D'autres moyens de fixation peuvent être prévus, tels que des clips ou similaires, pour fixer la plaque de fermeture au bord de la coque ou à la poignée 22

Dans l'exemple illustré, la coque 12 et la plaque de fermeture 18 ont une forme essentiellement circulaire. On appréciera cependant que la disposition inventive puisse être appliquée à des dispositifs d'éclairage de formes et de structures diverses, y compris ceux qui comportent plusieurs parties de coque ou boîtier. En conséquence, la plaque de fermeture 18 peut prendre différentes formes ou être fournie en plusieurs parties selon la forme du dispositif d'éclairage.

La figure 6 montre une plaque de fermeture 18 selon une autre variante. Dans cette disposition, la plaque de fermeture est composée de plusieurs parties ou secteurs 180, trois dans l'exemple illustré, qui peuvent ensuite être collés ensemble pour assurer l'étanchéité à l'eau et aux poussières. La fabrication de la plaque de fermeture 18 en plusieurs parties facilite le processus de moulage par injection et réduit ainsi le coût. En même temps, la précision de la fabrication peut être améliorée permettant notamment d'obtenir un angle de dépouille plus petit sur les éléments de lentille 20.

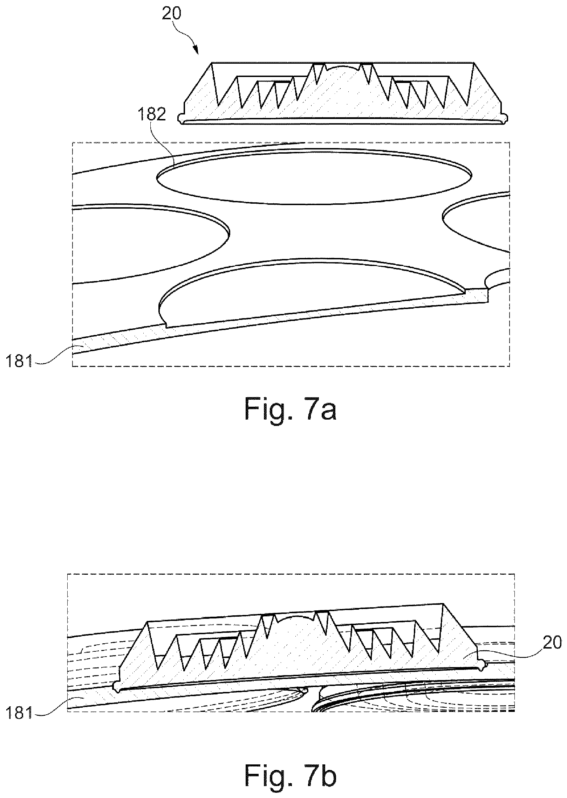

Les figures 7a et 7b illustrent une plaque de fermeture 18 selon un autre mode de réalisation. Dans cette configuration, la plaque de fermeture 18 est composée d'une plaque de base 181 qui présente un dessous lisse et des encoches ou des positions 182 pour recevoir les différents éléments de lentille 20. Les lentilles 20 sont ensuite fixées à la plaque de base 181 par des ultrasons ou autres moyens similaires. Cette disposition présente l'avantage que le moulage par injection de la plaque de base et des éléments de lentille 20 peut être effectué séparément. Cela permet d'obtenir des angles de prisme plus petits, ce qui améliore la précision de la lentille. Les éléments de lentille 20 peuvent être dotés d'une surface de sortie plane ou légèrement concave, comme illustré à la figure 7b, sans impact sur la face inférieure lisse de la plaque de fermeture 18. La plaque de base 181 et les éléments de lentille 20 peuvent également être fabriqués dans des matériaux différents. Par exemple, les lentilles 20 peuvent être en PMMA alors que la plaque de base 181 est en PC. Il est en outre concevable que la plaque de base soit constituée de plusieurs parties qui sont ensuite collées ensemble pour former la structure finale.

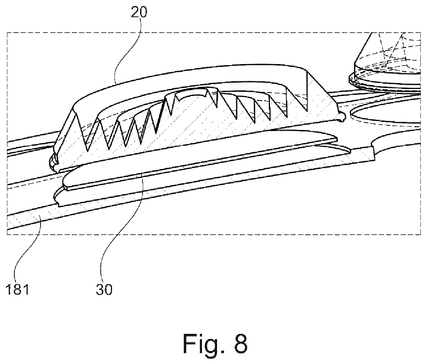

La structure composée de la plaque de fermeture illustrée dans les figures 7a et 7b peut encore être modifiée comme indiqué dans la figure 8. Dans cette disposition, une autre plaque optique 30 est interposée entre l'élément de lentille 20 et la plaque de base 181. La plaque optique 30 peut être une plaque de diffusion pour augmenter le diamètre de la tache lumineuse générée. La plaque optique 30 peut en outre être un filtre permettant de modifier la température de couleur de la lumière, ou d'absorber une bande de longueur d'onde pour des applications spécifiques. En interposant une plaque de diffusion ou un filtre 30 entre des éléments de lentille individuels spécifiques 20 et la plaque de base 181 et en permettant ensuite de contrôler l'alimentation en courant de sources lumineuses individuelles 24, le dispositif d'éclairage peut être utilisé pour fournir différents diamètres de spot lumineux ou différentes températures de lumière de manière réglable.

Dans une autre variante du dispositif, un ou plusieurs filtres peuvent être incorporés dans la plaque de fermeture au moyen d'un traitement de surface de la plaque 18 ou d'un ou plusieurs des éléments de lentille 20

### Liste de numéros de référence

- 1: Ampoule halogène
- 2: Réflecteur convexe
- 3: Lentille de condenseur
- 4: Filtre
- 5: Diffuseur/Déflecteur à prisme
- 6: Sous-face
- 10: Dispositif d'éclairage
- 12: Coque
- 14: Poignée
- 16: Bras
- 18: Plaque de fermeture
- 180: Secteurs de la plaque de fermeture
- 181: Plaque de base
- 182: Emplacement/encoche
- 20: Élément de lentille
- 22: Poignée stérile
- 24: Source lumineuse
- 26: Plot
- 201: Zone centrale de l'élément de lentille
- 202: Surface d'entrée du prisme
- 203: Surface de réflexion du prisme
- 204: Surface de sortie de l'élément de lentille
- 28: Piliers
- 30: Plaque optique

## Revendications

1. Dispositif d'éclairage opératoire comprenant une coque (12) et une pluralité de sources lumineuses (24) couplées à la coque, le dispositif comprenant en outre une plaque de fermeture (18) qui est au moins partiellement transparente à la lumière et qui peut être couplée à la coque pour clore le dispositif d'éclairage (10) en laissant passer la lumière des sources lumineuses, la plaque de fermeture (18) comprenant une pluralité d'éléments de lentille (20), chaque élément de lentille (20) étant une lentille de Fresnel, comprenant une zone centrale de lentille (201) entourée par une série de dents surélevés disposés concentriquement sur une surface intérieure de la plaque de fermeture (18), chaque élément de lentille étant configuré pour collecter et focaliser la lumière provenant d'une source lumineuse correspondante (24) afin de générer une tache d'éclairage de diamètre prédéterminé situé à une distance prédéterminée du dispositif d'éclairage, les sources lumineuses (24) et la plaque de fermeture (18) étant disposées de telle sorte que les faisceaux lumineux provenant des sources lumineuses et reçus par des éléments de lentilles associés (20) arrivent sur les éléments de lentille sensiblement sans réflexion ni déviation, le dispositif étant dépourvu d'éléments optiques entre les sources lumineuses (24) et la plaque de fermeture (18), la plaque de fermeture (18) comprenant au moins une plaque de base (181) ayant une face extérieure qui correspond à la surface de sortie de la lumière de la plaque de fermeture et une face intérieure, la face intérieure de la plaque de base (181) comprenant en outre une pluralité d'encoches (182) auxquelles les éléments de lentille (20) sont fixés.

2. Dispositif d'éclairage opératoire selon l'une des revendications 1, dans lequel la plaque de fermeture (18) comprend au moins un filtre.

3. Dispositif d'éclairage opératoire selon l'une quelconque des revendications précédentes, dans lequel la plaque de fermeture (18) a une surface de sortie de lumière sensiblement lisse, de préférence dans lequel la surface de sortie de lumière de la plaque de fermeture (18) est de forme sensiblement concave.

4. Dispositif d'éclairage opératoire selon l'une quelconque des revendications précédentes, dans lequel la plaque de fermeture (18) est comprise d'une pluralité de parties (180) qui sont liées entre elles.

5. Dispositif d'éclairage opératoire selon la revendication 1, dans lequel la plaque de fermeture (18) comprend en outre au moins une plaque optique (30) disposée entre les éléments de lentille (20) et la plaque de base (181) pour diffuser et/ou filtrer la lumière.

6. Dispositif d'éclairage opératoire selon l'une quelconque des revendications précédentes, dans lequel l'épaisseur de la plaque de fermeture dans les zones comprennent les éléments de lentille (20) est au maximum 50 mm, de préférence au maximum 25 mm.

7. Dispositif d'éclairage opératoire selon l'une quelconque des revendications précédentes, dans lequel la distance entre les sources lumineuses (24) et la plaque de fermeture (18) est comprise entre 60 mm et 20 mm, de préférence entre 50 mm et 20 mm.

8. Dispositif d'éclairage opératoire tel que revendiqué dans une revendication précédente, dans lequel au moins un des éléments de lentille (20) et la plaque de fermeture (18) sont constitués de PMMA, de PC, de silicone, ou une combinaison de ceux-ci.

9. Dispositif d'éclairage opératoire tel que revendiqué dans les revendications précédentes, comprenant des sources lumineuses à LED (10).

10. Dispositif d'éclairage opératoire selon l'une des revendications précédentes, dans lequel le dispositif est essentiellement vide entre les sources lumineuses (10) et la plaque de fermeture (18), de préférence, dans lequel tous les éléments optiques sont compris dans la plaque de fermeture (18).

11. Plaque de fermeture destinée à être utilisé dans un dispositif d'éclairage opératoire selon l'une quelconque des revendications précédente (10), la plaque de fermeture comprenant une plaque de base (181) ayant une face extérieure lisse adaptée pour servir de surface de sortie de lumière et une face intérieure, dans laquelle une pluralité d'éléments de lentilles (20) sont disposées sur la face intérieure de la plaque de base, la face intérieure de la plaque de base (181) comprenant en outre une pluralité d'encoches (182) auxquelles les éléments de lentille (20) sont fixés chaque élément de lentille (20) étant une lentille de Fresnel, comprennent une zone centrale de lentille (201) entourée par une série de dents surélevés disposés concentriquement sur une surface intérieure de la plaque de fermeture (18) et chaque élément de lentille étant configuré pour collecter et focaliser la lumière provenant d'une source lumineuse (24).

12. Plaque de fermeture selon la revendication 11 comprenant au moins une plaque optique (30) disposée entre les éléments de lentille (20) et la plaque de base (181) pour diffuser et/ou filtrer la lumière.

13. Procédé de fabrication d'une plaque de fermeture d'un dispositif d'éclairage opératoire selon une des revendications 11 à 12, comprenant les étapes consistant à : fournir une plaque de base ayant une face extérieure lisse adaptée pour servir de surface de sortie de lumière et une surface intérieure ; fournir une pluralité d'éléments de lentille (20) adaptés pour collecter et focaliser la lumière provenant de sources lumineuses sensiblement sans réflexion ni déviation ; et fixer les éléments de lentille (20) sur la surface intérieure de la plaque de base.

14. Procédé de fabrication d'une plaque de fermeture selon la revendication 13, comprenant en outre une étape consistant à interposer une plaque optique pour diffuser et/ou filtrer la lumière entre l'élément de lentille et la plaque de base avant la liaison.

## Patentansprüche

1. Chirurgische Beleuchtungsvorrichtung, umfassend ein Gehäuse (12) und eine Vielzahl von Lichtquellen (24), die an das Gehäuse gekoppelt sind, wobei die Vorrichtung ferner eine Abdeckplatte (18) umfasst, die zumindest teilweise lichtdurchlässig ist und an das Gehäuse gekoppelt werden kann, um die Beleuchtungsvorrichtung (10) zu verschließen, wobei sie das Licht der Lichtquellen durchlässt, wobei die Abdeckplatte (18) eine Vielzahl von Linsenelementen (20) umfasst, wobei jedes Linsenelement (20) eine Fresnel-Linse ist, umfassend eine zentrale Linsenzone (201), die von einer Reihe von erhöhten Zähnen, die konzentrisch auf einer Innenfläche der Abdeckplatte (18) angeordnet sind, umgeben ist, wobei jedes Linsenelement dazu konfiguriert ist, das von einer entsprechenden Lichtquelle (24) ausgehende Licht zu sammeln und zu bündeln, um einen Lichtfleck mit einem vorbestimmten Durchmesser, der sich in einer vorbestimmten Entfernung von der Beleuchtungsvorrichtung befindet, zu erzeugen, wobei die Lichtquellen (24) und die Abdeckplatte (18) so angeordnet sind, dass die von den Lichquellen ausgehenden und von zugehörigen Linsenelementen (20) empfangenen Lichtbündel im Wesentlichen ohne Reflexion oder Ablenkung auf die Linsenelemente auftreffen, wobei die Vorrichtung keine optischen Elemente zwischen den Lichtquellen (24) und der Abdeckplatte (18) aufweist, wobei die Abdeckplatte (18) zumindest eine Grundplatte (181) umfasst, die eine Außenseite, die der Lichtaustrittsfläche der Abdeckplatte entspricht, und eine Innenseite aufweist, wobei die Innenseite der Grundplatte (181) ferner eine Vielzahl von Aussparungen (182) umfasst, an denen die Linsenelemente (20) befestigt sind.

2. Chirurgische Beleuchtungsvorrichtung nach einem der Ansprüche 1, in der die Abdeckplatte (18) zumindest einen Filter umfasst.

3. Chirurgische Beleuchtungsvorrichtung nach einem der vorhergehenden Ansprüche, in der die Abdeckplatte (18) eine Lichtaustrittsfläche aufweist, die im Wesentlichen glatt ist, in der die Lichtaustrittsfläche der Abdeckplatte (18) vorzugsweise eine im Wesentlichen konkave Form aufweist.

4. Chirurgische Beleuchtungsvorrichtung nach einem der vorhergehenden Ansprüche, in der die Abdeckplatte (18) aus einer Vielzahl von Abschnitten (180) besteht, die untereinander verbunden sind.

5. Chirurgische Beleuchtungsvorrichtung nach Anspruch 1, in der die Abdeckplatte (18) ferner zumindest eine optische Platte (30) umfasst, die zwischen den Linsenelementen (20) und der Grundplatte (181) angeordnet ist, um das Licht zu streuen und/oder zu filtern.

6. Chirurgische Beleuchtungsvorrichtung nach einem der vorhergehenden Ansprüche, in der die Dicke der Abdeckplatte in den Zonen, die die Linsenelemente (20) umfassen, maximal 50 mm, vorzugsweise maximal 25 mm beträgt.

7. Chirurgische Beleuchtungsvorrichtung nach einem der vorhergehenden Ansprüche, in der die Entfernung zwischen den Lichtquellen (24) und der Abdeckplatte (18) zwischen 60 mm und 20 mm, vorzugsweise zwischen 50 mm und 20 mm liegt.

8. Chirurgische Beleuchtungsvorrichtung nach einem der vorhergehenden Ansprüche, in der zumindest eines der Linsenelemente (20) und die Grundplatte (18) aus PMMA, aus PC, aus Silikon oder einer Kombination aus diesen besteht.

9. Chirurgische Beleuchtungsvorrichtung nach einem der vorhergehenden Ansprüche, umfassend LED-Lichtquellen (10).

10. Chirurgische Beleuchtungsvorrichtung nach einem der vorhergehenden Ansprüche, in der die Vorrichtung zwischen den Lichtquellen (10) und der Abdeckplatte (18) im Wesentlichen leer ist, in der vorzugsweise alle optischen Elemente in der Abdeckplatte (18) enthalten sind.

11. Abdeckplatte, die dazu bestimmt ist, in einer chirurgischen Beleuchtungsvorrichtung nach einem der vorhergehenden Ansprüche (10) verwendet zu werden, wobei die Abdeckplatte eine Grundplatte (181) umfasst, die eine glatte Außenseite, die dazu ausgelegt ist, als Lichtaustrittsfläche zu dienen, und eine Innenseite aufweist, in der eine Vielzahl von Linsenelementen (20) auf der Innenseite der Grundplatte angeordnet ist, wobei die Innenseite der Grundplatte (181) ferner eine Vielzahl von Aussparungen (182), in denen die Linsenelemente (20) befestigt sind, umfasst, wobei jedes Linsenelement (20) eine Fresnel-Linse ist, umfassend eine zentrale Linsenzone (201), die von einer Reihe von erhöhten Zähnen, die konzentrisch auf einer Innenfläche der Abdeckplatte (18) angeordnet sind, umgeben ist, und wobei jedes Linsenelement dazu konfiguriert ist, das von einer Lichtquelle (24) ausgehende Licht zu sammeln und zu bündeln.

12. Abdeckplatte nach Anspruch 11, umfassend zumindest eine optische Platte (30), die zwischen den Linsenelementen (20) und der Grundplatte (181) angeordnet ist, um das Licht zu streuen und/oder zu filtern.

13. Verfahren zur Herstellung einer Abdeckplatte einer chirurgischen Beleuchtungsvorrichtung nach einem der Ansprüche 11 bis 12, umfassend die Schritte, die aus Folgendem bestehen: Bereitstellen einer Grundplatte, die eine glatte Außenseite, die dazu ausgelegt ist, als Lichtaustrittsfläche zu dienen, und eine Innenseite aufweist; Bereitstellen einer Vielzahl von Linsenelementen (20), die dazu ausgelegt sind, das von Lichtquellen ausgehende Licht im Wesentlichen ohne Reflexion oder Ablenkung zu sammeln und zu bündeln; und Befestigen der Linsenelemente (20) auf der Innenfläche der Grundplatte.

14. Verfahren zur Herstellung einer Abdeckplatte nach Anspruch 13, ferner umfassend einen Schritt, der daraus besteht, eine optische Platte zum Streuen und/oder Filtern des Lichts zwischen dem Linsenelement und der Grundplatte vor der Verbindung einzufügen.

## Claims

1. Surgical lighting device comprising a shell (12) and a plurality of light sources (24) coupled to the shell, the device further comprising a closure plate (18) being at least partially transparent to light and being configured to be coupled to the shell to enclose the lighting device (10) while allowing light from the light sources to pass through, the closure plate (18) comprising a plurality of lens elements (20), each lens element (20) being a Fresnel lens, comprising a central lens area (201) surrounded by a series of raised teeth arranged concentrically on an inner surface of the closure plate (18), each lens element being configured to collect and focus light emitted by a corresponding light source (24) in order to generate a lighting spot of predetermined diameter located at a predetermined distance from the lighting device, the light sources (24) and the closure plate (18) being arranged such that the light beams originating from the light sources and received by associated lens elements (20) are incident on the lens elements substantially without reflection or deviation, the device being devoid of optical elements between the light sources (24) and the closure plate (18), the closure plate (18) comprising at least one base plate (181) having an outer surface that corresponds to the light output surface of the closure plate and an inner surface, the inner surface of the base plate (181) further comprising a plurality of notches (182) to which the lens elements (20) are fixed.

2. Surgical lighting device according to claim 1, wherein the closure plate (18) comprises at least one filter.

3. Surgical lighting device according to any one of the preceding claims, wherein the closure plate (18) has a substantially smooth light output surface, preferably wherein the light output surface of the closure plate (18) is substantially concave in shape.

4. Surgical lighting device according to any one of the preceding claims, wherein the closure plate (18) comprises a plurality of parts (180) which are bonded together.

5. Surgical lighting device according to claim 1, wherein the closure plate (18) further comprises at least one optical plate (30) arranged between the lens elements (20) and the base plate (181) to diffuse and/or filter light.

6. Surgical lighting device according to any one of the preceding claims, wherein the thickness of the closure plate in the areas comprising the lens elements (20) is at most 50 mm, preferably at most 25 mm.

7. Surgical lighting device according to any one of the preceding claims, wherein the distance between the light sources (24) and the closure plate (18) is between 60 mm and 20 mm, preferably between 50 mm and 20 mm.

8. Surgical lighting device according to any one of the preceding claims, wherein at least one of the lens elements (20) and the closure plate (18) is made of PMMA, PC, silicone, or a combination thereof.

9. Surgical lighting device according to any one of the preceding claims, comprising LED light sources (10).

10. Surgical lighting device according to any one of the preceding claims, wherein the device is substantially empty between the light sources (10) and the closure plate (18), preferably, wherein all optical elements are included in the closure plate (18).

11. Closure plate intended for use in a surgical lighting device according to any one of the preceding claims (10), the closure plate comprising a base plate (181) having a smooth outer surface configured to serve as a light output surface and an inner surface, wherein a plurality of lens elements (20) are arranged on the inner surface of the base plate, the inner surface of the base plate (181) further comprising a plurality of notches (182) to which the lens elements (20) are fixed, each lens element (20) being a Fresnel lens, comprising a central lens area (201) surrounded by a series of raised teeth arranged concentrically on an inner surface of the closure plate (18), and each lens element being configured to collect and focus light emitted by a light source (24).

12. Closure plate according to claim 11, comprising at least one optical plate (30) arranged between the lens elements (20) and the base plate (181) to diffuse and/or filter light.

13. Method for manufacturing a closure plate of a surgical lighting device according to any one of claims 11 to 12, comprising the steps of: providing a base plate having a smooth outer surface configured to serve as a light output surface and an inner surface; providing a plurality of lens elements (20) configured to collect and focus light emitted by light sources substantially without reflection or deviation; and fixing the lens elements (20) onto the inner surface of the base plate.

14. Method for manufacturing a closure plate according to claim 13, further comprising a step of interposing an optical plate to diffuse and/or filter light between the lens elements and the base plate prior to bonding.
